# EUROPEAN PATENT APPLICATION

(11) **EP 0 634 723 A1**
(43) Date of publication of application: **18.01.1995**
(21) Application number: 93111151.2
(22) Date of filing: 12.07.1993
(51) Int. Cl.: G06F 13/40

(54) **Card coupler plug (CCP) for a card interface unit (CIU)**

(71) Applicant: Angewandte Digital Elektronik GmbH, 21521 Dassendorf (DE)
(72) Inventor: Kreft, Hans-Dietrich, D-21521 Dassendorf (DE)

(57) **Abstract**

A hardware is described in this paper named CARD COUPLER PLUG (CCP) which works between the CARD LEVEL ELEMENTS and the COUPLER LEVEL ELEMENTS. The function of a CCD is to allow to use different card types in a CARD MECHANIC (CM). The CCD serves automatically the right physical requirements to the specific card which occurs on the slot at the card mechanic.

## Description

### Field of the invention

This description of the CCP relates to Integrated circuit(s) cards (IC-cards) and card terminals. IC-cards, terminals and communication standards between cards and terminals are described in the ISO 7816 for cards with contacts, in the ISO 10 536 for contactless cards and in the EN 726 for cards and terminals for telecommunications use.

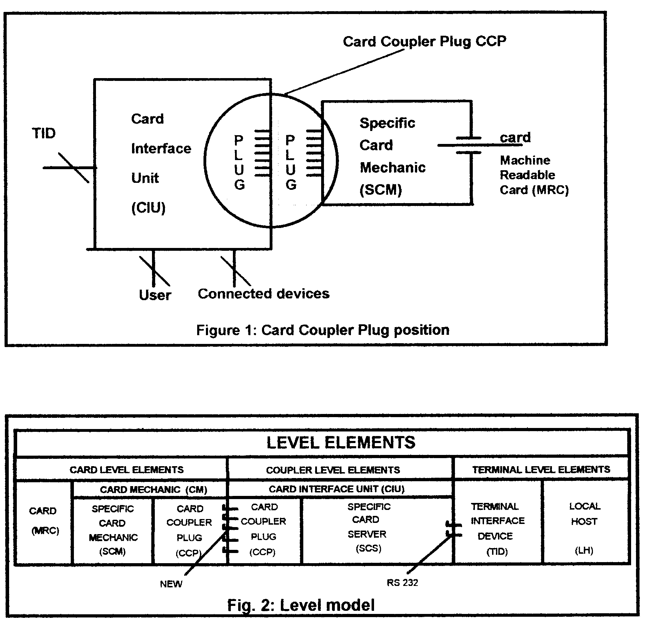

The goal of this patent description is:
To propose on the physical layer level a Card Coupler Plug CCP between the Specific Card Mechanic (SCM) at one side and the Card Interface Unit (CIU) at the other side in relation to the definitions of the ISO 7816 and the ISO 10536 standards (see Fig. 1).

To make the international standards of different IC-cards workable in a single terminal is the main goal of this description.

The goal of this patent is to describe a CARD COUPLER PLUG (CCP) which connects different cards to the application dependent terminal. Furthermore it is a goal that a card type which is indicated at the reader slot will be served by the right technical conditions of a CARD INTERFACE UNIT (CIU).

### Background

The standardisation of IC-cards has led to many results which are described in the papers of the ISO/IEC/JTC1/SC17, the papers of the CEN/TC224 and the ETSI papers.

That means there could be IC-cards issued to the user which work by different physical principles like contact card and contactless cards. This different cards would not work compatible in a terminal. Especially the technical incompatibility of contact and contactless cards is a problem in the market. It is also a great problem for card component manufacturer to build up card independent components because there is not a standard connection base in the reader.

### Description of the figures.

### Fig. 1: Card Coupler Plug position.

It is shown the Card Interface Unit (CIU) which transmits serial information between a host or a terminal and a Specific Card Mechanic (SCM). In the SCM could be inserted a Machine Readable Card (MRC).

It is obvious that there has to be a direct physical connection which could establish a bi-directional signal flow for communication use between the MRC/SCM on the one hand and the CIU on the other.

The fundamental assumption of the different standardisation papers (especially the ISO 7816) is that a description of the MRC-contacts on the one hand and a description of protocols on the other would determine compatibility between both sides. The remaining problem is to make sure that different CARDS and the CIU can be coupled by contacts in a predetermined manner in conformity with the standardisation.

### Fig. 2: Level model.

This figure shows the logical separable elements between the card level and the system level.

It was used on the physical layer the following level terminology:

| | | | | |
|---|---|---|---|---|
| **I.** | **CARD** **LEVEL** | **SYSTEM** **LEVEL** | | |
| **II.** | **CARDLE** **VEL** | **COUPLER** **LEVEL** | **SYSTEM** **LEVEL** | |
| **III.** | **CARD** **LEVEL** | **COUPLER** **LEVEL** | **TERMINAL** **LEVEL** | **HOST** **LEVEL** |

The level elements are:
- CARD LEVEL ELEMENTS with the CARD MECHANIC (CM), the CARD COUPLER PLUG (CCP) and the SPECIFIC CARD MECHANIC (SCM), the MCR. The MCR is in accordance to the ISO standardisation description for different card types.
- COUPLER LEVEL ELEMENTS named CARD INTERFACE UNIT (CIU), the SPECIFIC CARD SERVER (SCS), and the CARD COUPLER PLUG (CCP) on the CIU-side.
- TERMINAL LEVEL ELEMENTS with the TERMINAL INTERFACE DEVICE (TID) and the LOCAL HOST (LH) or a host connection.

The CARD LEVEL ELEMENTS realises by way of physical elements like contacts, coils and capacitors the electrical and communication interaction to the real cards. It was wished that the COUPLER LEVEL ELEMENTS can distinguish between the different cards like cards with contacts and contactless cards. Therefore it is necessary that a CARD MECHANIC (CM) serves the information for the special type of card which is inserted in the slot.

It is indicated by Fig. 2 that the CCP-connections are the new elements in this patent description. The RS-232 connection between the SCS and the TID is always well known and established.

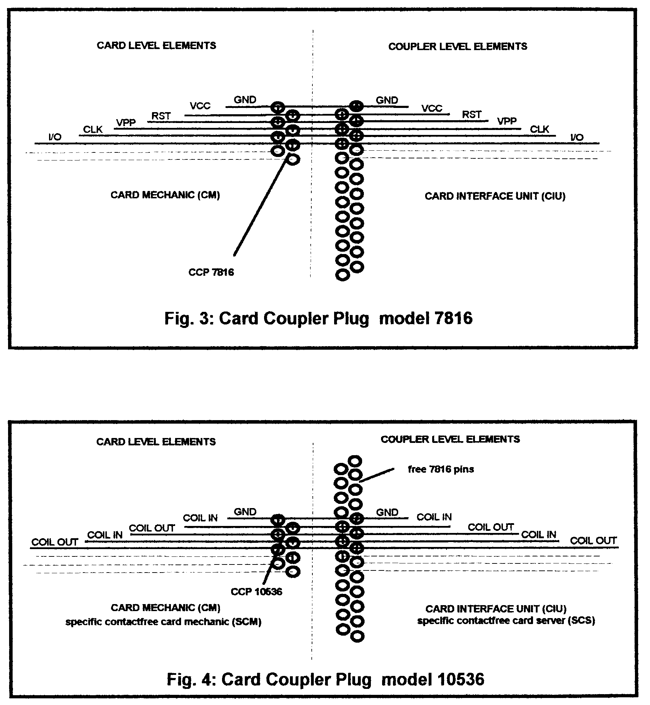

### Fig. 3: Card Coupler Plug model 7816

This figure shows a performance of 1 to 1 plug connection between a CM and a CIU. Technical use is "that cables should use circuits that are terminated at the same pin of the connectors at both ends". That means the CCP has a pin definition that is 1 to 1 equivalent between the CARD INTERFACE UNIT (CIU) and the CARD MECHANIC (CM). This principle is shown in Fig. 3 for the ISO 7816 description of a card which uses contacts. The specifications GND, VCC, RST, VPP, CLK, I/O are described in the ISO 7816. For all this needs the CCP contains prepared standardized connections which connect the elements SCS and SCM electrically.

### Fig. 4: Card Coupler Plug model 10536

The same principle of Fig. 3 is shown in Fig. 4 for the ISO 10536 description of a card which do not use contacts. The specifications GND, coil in, coil out of the wires could be useful for a contactless card. All the data's are transmitted by the coil connection wires and the energy is also transformed by the coils.

### Fig. 5: CCP 7816 indication

In this figure the VCC-pin on the CM-side is connected with a specific pin, the 7816 Plug Indication Pin (PIP). By the 1 to 1 connection of the Card Coupler Plug (CCP) the VCC-pin-level is wired direct into the CIU.

### Fig. 6: CCP 10536 indication

In this figure the VCC-pin on the CM-side is connected with a specific pin, the 10536 Plug Indication Pin (PIP). By the 1 to 1 connection of the Card Coupler Plug (CCP) the VCC-pin-level is wired direct into the CIU and indicates there that a contactless card has to be served.

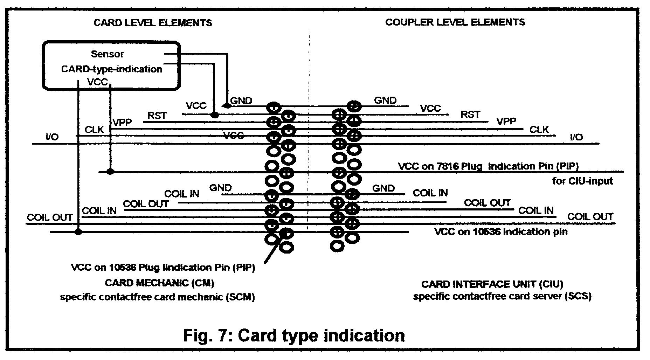

### Fig. 7: Card type indication

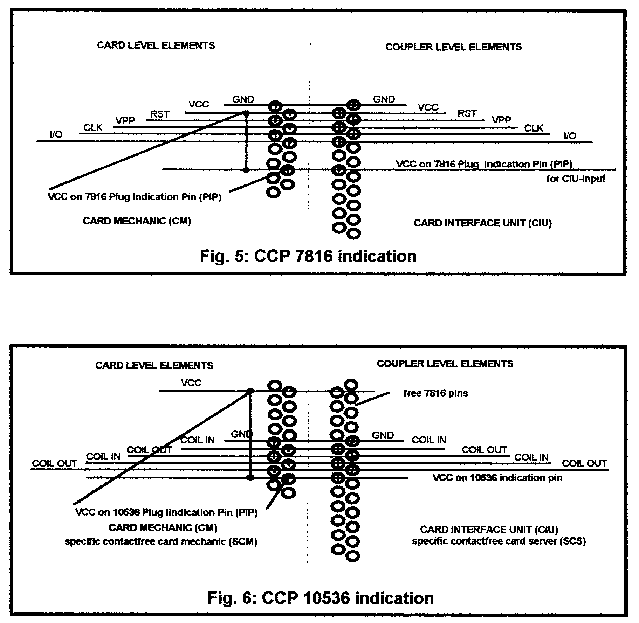

This figure is a combination of figures 5, 6 and contains additional a sensor for Card-type-identification. The figure shows a plug configuration of two different cards: a card with ISO 7816 contacts and a card without contacts (10536 type). The right connection to the PIPs is served by the Card-type-identification.

### Explanation to the claim 1:

Claim 1 describes the CARD COUPLER PLUG (CCP) as the PLUG-element which is positioned between the CARD LEVEL ELEMENTS and the COUPLER LEVEL ELEMENTS. This CCP contains free pins, named PLUG INDICATION PINS which indicate by their voltage level the type of cards which are connected to the CARD LEVEL side.

Two distinct and specific performances are shown in Fig. 5, 6. The VCC pin is connected to the first 7816 Plug Indication Pin (or to the 10536 PIP) on the CARD LEVEL side and indicates therefore that a 7816 card (a contact card) has to be served (ore a 10536 contactless card has to be served). This first PIP is connected direct to the second PIP on the CARD LEVEL side. This second PIP is connected to the electronic named CARD INTERFACE UNIT (CIU). This CIU has to serve all the electronic requirements for the different cards which can occur at the CARD LEVEL side.

### Explanation to the claim 2:

The connection between the power supply voltage (VCC) and the first PIP on the CARD LEVEL side is performed by the Card-type-identification. That is an electronic sensor system which indicates the type of card on the CARD LEVEL side. In relation to the identified card the right PIP was connected to the power supply voltage.

By using the method of the claim 1 and 2 it is possible to use different types of cards in the market and serve them at the same slot at a mechanic card system. The explained method performs compatibility between different cards. It is only necessary that the SCS serves the different physical requirements for the different types of cards. By this method it is also possible to serve synchronous and asynchronous cards.

## Claims

1. A plug named CARD COUPLER PLUG which is characterised by its defined and predetermined wired 1 to 1 connection between CARD LEVEL ELEMENTS and COUPLER LEVEL ELEMENTS and which contains additional free pins named PLUG INDICATION PINs (PIPs) which are predetermined connected to a supply voltage if there has to be served on the card level side a specific card, whereby this first PIP of the CARD LEVEL side is predetermined connected to an equivalent second PIP on the COUPLER LEVEL side and whereby this second PIP signalises by its voltage level and input to an electronic named CARD INTERFACE UNIT (CIU) what a card type has to be served on the CARD LEVEL side.

2. A CARD COUPLER PLUG (CCP) according to claim 1 which contains on the CARD LEVEL side additional a sensor for card-type-identification and which connects to the PIPs the right supply voltage in relation to the card which is indicated by the sensor.
